# EUROPÄISCHE PATENTSCHRIFT

(11) **EP 1 380 202 B1**
(45) Veröffentlichungstag und Bekanntmachung des Hinweises auf die Patenterteilung: **26.10.2005**
(21) Anmeldenummer: 03014793.8
(22) Anmeldetag: 28.06.2003
(51) Int. Cl.: A01D 41/127, A01B 63/111

(54) **Automatisches Steuersystem eines Mähdreschers**
Automatic control system of a combine
Système de commande automatique d'une moissonneuse-batteuse

(30) Priorität: 11.07.2002 US 193069
(43) Veröffentlichungstag der Anmeldung: 14.01.2004
(73) Patentinhaber: DEERE & COMPANY, Moline, Illinois 61265-8098 (US)
(72) Erfinder: Sheidler, Alan David, Moline, IL 61265 (US); Sahlin, Mark Peter, Bettendorf, IA 52722 (US); Hennings, Kenny L., Tripoli, IA 50676 (US)
(74) Vertreter: Holst, Sönke

(56) Entgegenhaltungen:
- EP-A- 1 316 868
- FR-A- 2 764 401
- US-A- 5 666 793
- US-A1- 2001 016 794

## Beschreibung

Die Erfindung betrifft ein automatisches Steuersystem eines Mähdreschers, der einen Erntevorsatz, eine zur Veränderung der Höhe des Erntevorsatzes eingerichtete Einrichtung, eine zur Veränderung der Vortriebsgeschwindigkeit des Mähdreschers eingerichtete Einrichtung und eine Steuereinheit aufweist, die mit der zur Veränderung der Höhe des Erntevorsatzes eingerichteten Einrichtung und der zur Veränderung der Vortriebsgeschwindigkeit des Mähdreschers eingerichteten Einrichtung signalübertragend verbunden ist, wobei die Steuereinheit einen Speicher umfasst, der es ermöglicht, die Höhe des Erntevorsatzes und die Vortriebsgeschwindigkeit entsprechend einer programmierten Sequenz zu verändern.

Konventionelle landwirtschaftliche Mähdrescher weisen einen vorn am Mähdrescher anbringbaren Erntevorsatz auf, der einen vorderen Abschnitt zur Gutaufnahme und einen hinteren Abschnitt mit Elementen zur Bearbeitung des Ernteguts und/oder zum Transportieren des Ernteguts vom vorderen Abschnitt in den Körper des Mähdreschers umfasst. Im Körper des Mähdreschers wird das Korn von dem Kaff und dem Spreu getrennt, gesammelt und danach über einen Schneckenförderer entladen. Es gibt eine Vielzahl von Designvarianten derartiger Mähdrescher, wie sie beispielsweise in der US 4 450 671 A, US 4 663 921 A, US 5 445 563 A oder US 6 257977 A beschrieben sind.

Der Bediener eines Mähdreschers muss während des normalen Betriebs des Mähdreschers viele Funktionen steuern und aktivieren. Wenn der Mähdrescher ein Feld aberntet, müssen am Ende einer Reihe oder eines "Schnitts" viele Geräte und Steuerungen am Mähdrescher geändert oder angepasst werden. Wenn der Mähdrescher sich dem Ende einer Reihe nähert, muss der Bediener beispielsweise einen Knopf drücken, um den Erntevorsatz anzuheben, dann muss er den Kontrollhandgriff des hydrostatischen Getriebes nach vorn schieben, um den Mähdrescher zu beschleunigen und dann muss er das Lenkrad drehen. Der Entladeschneckenförderer muss nach innen geschwenkt werden, um einen Kontakt mit äußeren Hindernissen während des Drehens zu vermeiden. Es ist auch möglich, dass der Bediener das Bremspedal betätigen muss, um zu erreichen, dass der Mähdrescher effektiv steuert oder der Bediener muss den Allradantrieb ausschalten, um sich schneller zum Wiedereintrittspunkt auf dem Feld zu bewegen, an dem es wünschenswert sein kann, den Mähdrescher zu verzögern, während der Erntevorsatz abgesenkt wird, der Allradantrieb eingeschaltet wird, usw.. Wegen der Anzahl der notwendigerweise gleichzeitig durchzuführenden Operationen ist ein hoher Grad an Fahrerfahrung erforderlich, um alle Einstellungen und Änderungen korrekt durchzuführen.

Die US 5 666 793 A offenbart einen Mähdrescher mit einem so genannten Betriebsdatenkataster. Darin werden bei einem Erntevorgang die jeweiligen Betriebsdaten des Mähdreschers in Abhängigkeit von der jeweiligen Position abgespeichert. Sie können bei späteren Erntevorgängen wieder abgerufen werden, um den Bediener zu entlasten. Dabei erfolgt ein Abruf der Betriebsdaten in Abhängigkeit von der jeweiligen Position. Als nachteilig ist anzusehen, dass zunächst das gesamte Feld abgefahren werden muss, um das System später nutzen zu können. Beim Abernten eines Felds treten aber eine Reihe an relativ einfachen Vorgängen auf, die sich vielfach wiederholen und nicht von der jeweiligen Position abhängen, wie die beim Wenden am Enden einer Überfahrt erforderlichen, oben erwähnten Bedienvorgänge. Dieses System ist jedenfalls beim ersten Erntevorgang nicht zu einer automatischen Kontrolle dieser Vorgänge geeignet.

In der US 2001/0016794 A wird ein Funktionsmanagementsystem für ein Fahrzeug, insbesondere einen Traktor beschrieben. Durch einen Bediener in einem Lerndurchgang eingebbare Sequenzen für bewegliche Arbeitselemente des Traktors können anschließend wieder abgespielt werden. Dazu aktiviert der Bediener eine Taste.

Die EP 0 775 612 A beschreibt ein Steuerungsverfahren für einen selbstfahrenden Mähdrescher, bei dem anhand eines Aufprallsensors unter den Dreschkörben erkannt wird, wenn beim Erreichen des Wendebereichs der Mähdrescher nicht mehr mit Erntegut gespeist wird. In diesem Fall wird der Erntevorsatz in eine dem Feldende zugeordnete Position verbracht und die automatische Steuerung der Fahrgeschwindigkeit wird abgeschaltet. Die automatisch angefahrenen Einstellungen können über eine Tastatur geändert werden. Es wird jedoch nicht offenbart, dass eine Sequenz, d. h. eine Reihe von Bewegungen nacheinander ausgeführt wird.

Die der Erfindung zu Grunde liegende Aufgabe wird darin gesehen, der Bedienungsperson die Bedienung des Mähdreschers zu erleichtern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung ermöglicht es auf Knopfdruck eine Sequenz von Operationen des Mähdreschers zu veranlassen. Der Bediener kann eine Sequenz manueller Beeinflussungen der Vortriebseinrichtungen und Ausrüstung des Mähdreschers durchführen und die Steuereinheit zeichnet Informationen bezüglich der Sequenz der Operationen des Mähdreschers auf und speichert sie ab. Nach einer danach erfolgenden Betätigung eines Knopfes oder Schalters kann die Steuereinheit dann einen Ausführungs- oder Abspielmodus beginnen, in dem die Steuereinheit die aufgezeichnete Sequenz der Operationen durchführt. Wenn der Mähdrescher beispielsweise das Ende des Felds erreicht, kann durch Drücken eines dem Feldende zugeordneten Knopfs bewirkt werden, dass der Erntevorsatz angehoben und die Vortriebsgeschwindigkeit gesteigert werden, um mit höherer Geschwindigkeit wenden oder an anderer Stelle wieder ins Feld einfahren zu können. Das Ende der Feldüberfahrt wird erfindungsgemäß durch einen Erntegutsensor für eine automatische Aktivierung des automatischen Steuersystems erfasst.

Auf diese Weise wird die Bedienung des Mähdreschers wesentlich erleichtert.

Das Steuersystem kann auch andere Operationen abrufen, wie ein Nachinnenverschwenken des Entladeschneckenförderers, um ohne Kollisionsgefahr umdrehen zu können, der während des Befahrens des Felds aktivierte Vierradantrieb kann ausgeschaltet werden, die Gangstufe eines Getriebes kann geändert werden und die Geschwindigkeit einer Erntegutbearbeitungseinrichtung kann abgesenkt werden. Ein anderer Knopf kann betätigt werden, um den Beginn einer anderen Sequenz zu veranlassen, wenn der Mähdrescher den Punkt erreicht, an dem er wieder in das Feld hineinfährt. Die Sequenz wird dann gestartet, wenn der Bediener sie veranlasst. Ihre Aktivierung hängt somit nicht von der Position des Mähdreschers, sondern nur vom Zeitpunkt der Betätigung des Schalters ab.

Bei einer beispielhaften Sequenz würde der Mähdrescher selbsttätig auf 2 km/h verzögern, wenn der Erntevorsatz in die Ernteposition abgesenkt wird. Wenn der Mähdrescher dann in das Feld einfährt, kann die Vortriebsgeschwindigkeit selbsttätig auf die maximale Geschwindigkeit gesteigert werden, die durch den Bediener vorgegeben wird, oder auf die eine jegliche maximale Geschwindigkeit, mit der der Mähdrescher betrieben werden kann, um die Effizienz zu maximieren oder eine Überlastung des Mähdreschers zu vermeiden. Der Entladeschneckenförderer kann auch nach außen verschwenkt werden, um Korn abzutanken, wenn sich der Mähdrescher bewegt. Die Sequenz der Operationen kann vorprogrammiert oder durch den Bediener in einem Lernmodus eingegeben werden.

Das Steuersystem kann die Mähdreschergeschwindigkeit auch basierend auf Steuerparametern steuern. Für den Mähdrescher kann eine Optimierung oder Kontrolle der Verluste ein primärer Parameter und eine Motorleistungsgrenze ein zweitrangiger Parameter sein. Der Bediener kann die gewünschte maximale Geschwindigkeit entsprechend seiner Fähigkeit und Bequemlichkeit einstellen und der Mähdrescher kann die Geschwindigkeit derart einstellen, dass unterhalb dieser oberen Geschwindigkeitsgrenze eine möglichst effiziente Produktion erreicht wird. Am Ende einer Feldüberfahrt kann der Bediener die Geschwindigkeitssteuerung anhand der Kontrolle oder Optimierung der Ernteverluste durch ein Betätigen des dem Feldende zugeordneten Knopfes übersteuern, wie oben beschrieben.

In einer anderen Ausführungsform könnte die Lenkung des Mäh-dreschers durch das automatische Steuersystem kontrolliert werden, insbesondere zwischen dem Ende einer Feldüberfahrt und dem Anfang der nächsten Feldüberfahrt. Die Lenkung und die Richtung des Mähdreschers könnte durch ein Positionierungssystem (insbesondere eine Empfangseinheit für ein satellitenbasiertes Positionsbestimmungssystem) korrigiert werden, das mit der Steuereinheit kommuniziert.

Diese Sequenz kann mit den vom Mähdrescher zwischen den Operationen zurückgelegten Entfernungen korreliert sein. Die Sequenz wird vorzugsweise in denselben Distanzintervallen durchgeführt, auf denen sie erlernt wurde, unabhängig von der Geschwindigkeit des Mähdreschers.

In den Zeichnungen ist ein nachfolgend näher beschriebenes Ausführungsbeispiel der Erfindung dargestellt. Es zeigt:
- Fig. 1: eine Seitenansicht eines Mähdreschers mit einem erfindungsgemäßen Steuerungssystem,
- Fig. 2: ein schematisches Systemdiagramm eines erfindungsgemäßen Steuerungssystems,
- Fig. 2A: ein Steuerungssystem für die Höhenverstellung des Erntevorsatzes,
- Fig. 3: eine Ansicht der Vorderfront einer Steuerungs- und Anzeigeneinheit des Mähdreschers aus Figur 1,
- Fig. 4: ein vereinfachtes logisches Flussdiagramm, in dem der Betrieb des erfindungsgemäßen Lern- und Abspeichermodus dargestellt ist, und
- Fig. 5: ein vereinfachtes logisches Flussdiagramm, in dem der Betrieb des erfindungsgemäßen Ausführungsmodus dargestellt ist.

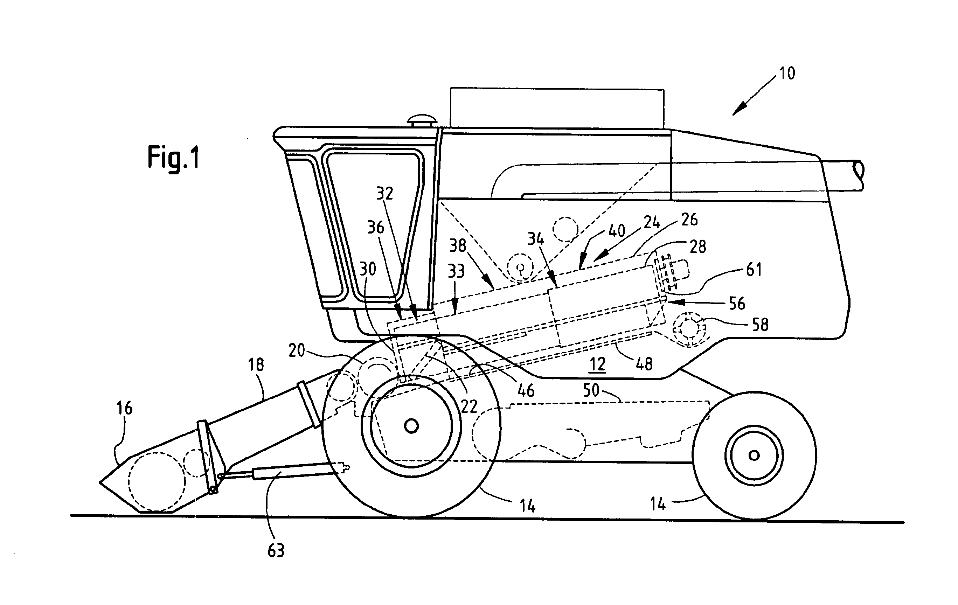

Die Figur 1 zeigt einen Mähdrescher, wie er in der US 6 257 977 A offenbart ist, deren Offenbarung durch Verweis mit in die vorliegenden Unterlagen aufgenommen wird. Der dargestellte Mähdrescher ist mit einer axialen, drehbaren Gutbearbeitungseinrichtung versehen. Der Mähdrescher umfasst eine tragende Struktur oder ein Chassis 12, an dem im Eingriff mit dem Boden befindliche Mittel 14 befestigt sind, die in Form von Rädern dargestellt werden. Alternativ können die Räder durch Gleisketten ersetzt werden. Ein Erntevorsatz 16 in Form eines Schneidwerks wird verwendet, um Erntegut aufzunehmen und es einem Schrägförderer 18 zuzuführen. Das geerntete Gut wird vom Schrägförderer 18 einer Leittrommel 20 zugeführt. Die Leittrommel 20 führt das Gut nach oben einer drehbaren Erntegutbearbeitungseinrichtung 24 zu. Die drehbare Erntegutbearbeitungseinrichtung 24 ist zwischen den Seitenwänden des Mähdreschers 10 angeordnet. Die Seitenwände bilden einen Teil der tragenden Struktur 12.

Die drehbare Erntegutbearbeitungseinrichtung 24 umfasst ein Gehäuse 26 und einen darin angeordneten Rotor 28. Das geerntete Gut tritt in das Gehäuse 26 durch einen Einlass am Einlassende 30 des Gehäuses 26 ein. Der Rotor ist mit einem Einlassbeschickungsabschnitt 32, einem Dreschabschnitt 33 und einem Trennabschnitt 34 ausgestattet. Das Gehäuse 26 hat einen entsprechenden Beschickungsabschnitt 36, einen Dreschabschnitt 38 und einen Trennabschnitt 40.

Sowohl der Dreschabschnitt 33 und der Trennabschnitt 34 des Rotors sind mit (nicht gezeigten) Guteingriffselementen ausgestattet. Der Dreschabschnitt 38 des Gehäuses 26 ist mit einem Dreschkorb 46 ausgestattet, während der Trennabschnitt 40 des Gehäuses 26 mit einem Rost 48 versehen ist. Korn und Spreu, die aus der Gutmatte freigesetzt wurden, fallen durch den Dreschkorb 46 und durch den Rost 48. Dreschkorb 46 und Rost 48 verhindern einen Durchtritt von Erntegut, das größer als Korn oder Spreu ist, in ein Reinigungssystem 50 des Mähdreschers 10 unterhalb der drehbaren Gutbearbeitungseinheit 24.

Korn und Spreu, die durch den Dreschkorb 46 und den Rost 48 fallen, werden dem Reinigungssystem 50 zugeführt, das die Spreu vom Korn entfernt. Das saubere Korn wird dann durch einen (nicht gezeigten) Elevator dem Korntank 52 zugeführt, wo es dann einem Lastwagen oder Anhänger durch einen Entladeschneckenförderer 54 zugeführt werden kann. Stroh, das das Ende 61 des Gehäuses 26 erreicht, wird durch einen Auslass 56 einer Leittrommel 58 zugeführt. Die Leittrommel 58 fördert das Stroh an der Rückseite des Mähdreschers hinaus. Das Ende 61 ist somit das Auslassende des Gehäuses. Das Erntegut bewegt sich durch die drehbare Gutbearbeitungseinheit 24 in einer Gutflussrichtung vom Einlassende 30 zum Auslassende 61 des Gehäuses. Der Betrieb des Mähdreschers 10 wird von der Bedienerkabine 60 aus gesteuert.

Der Erntevorsatz 16 kann unter Verwendung von Hubzylindern 63 angehoben werden. Der Entladeschneckenförderer 54 kann durch einen Zylinder oder Motor (nicht gezeigt) um eine vertikale Achse zwischen einer zeichnerisch dargestellten Innenposition und einer Außenposition verschwenkt werden, in der er sich im Wesentlichen senkrecht zur Fahrtrichtung des Mähdreschers erstreckt, um Korn auf einen Wagen abzutanken. Der Entladeschneckenförderer 54 kann nach innen verschwenkt werden, so dass er sich im Wesentlichen parallel zur Fahrtrichtung erstreckt, wenn er nicht benutzt wird.

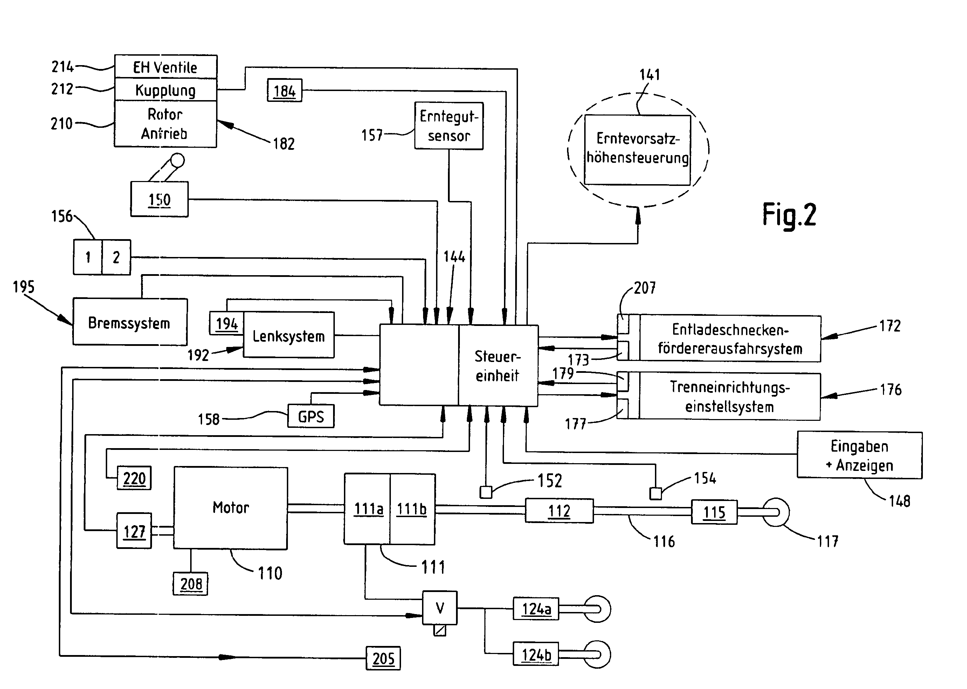

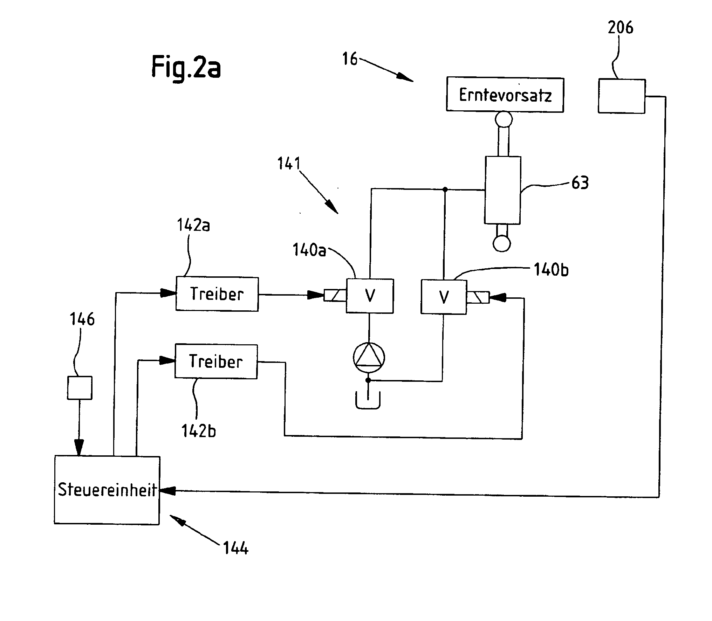

Die Figur 2 stellt das Steuersystem des Mähdreschers 10 dar. Wie noch beschrieben wird, wird das Steuersystem durch eine Steuereinheit (VCU, vehicle control unit) 144 gesteuert. Der Mähdrescher 10 umfasst einen Verbrennungsmotor 110, der ein hydrostatisches Getriebe 111 antreibt, welches ein Schaltgetriebe 112 antriebt, das eine Ausgangsantriebswelle 116 treibt. Die Ausgangsantriebswelle 116 ist über ein Differenzial 115 mit den Rädern 117 verbunden, welche die Reifen 14 (s. Figur 1) haltern. Das Schaltgetriebe 112 umfasst ein Getriebe 118, das durch eine Anzahl an druckbetätigten Steuerelementen oder Kupplungen gesteuert wird, welche durch eine entsprechende Anzahl an elektromagnetisch betätigten Proportionalsteuerventilen 122 gesteuert werden. Die Proportionalsteuerventile 122 können elektrohydraulische Ventile sein.

Das hydrostatische Getriebe 111 umfasst eine hydraulische Pumpe 111a, die hydraulisch mit einem hydraulischen Motor 111b gekoppelt ist. Für einen Mähdrescher 10 mit Vierradantriebsfähigkeit ist die hydraulische Pumpe 111a mit hydraulischen Motoren 124a, 124b für die Hinterräder verbunden, von denen jeweils einer an einem Hinterrad 125a, 125b angeordnet ist. Der Motor 110 treibt auch eine hydraulische Pumpe 127 an, die unter Druck stehendes Hydraulikfluid ausgewählten Steuerventilen oder Hebeln bereitstellt.

Die Steuereinheit 144 ist vorzugsweise eine mikroprozessorbasierte elektronische Steuereinheit. Die Steuereinheit 144 empfängt Signale von einer Eingabe- und Anzeigeeinheit 148, einem Motorgeschwindigkeitssensor 152, vorzugsweise einem magnetischen Aufnehmer, und einem Achsgeschwindigkeitssensor 154, vorzugsweise einem Halleffektsensor, der ein Achsgeschwindigkeitssignal bereitstellt. Die Steuereinheit 144 empfängt auch ein Gangauswahlsignal von einer verschiebbaren Hebeleinheit 150 und ein Sequenzauswahlsignal von einem Schalter 156 mit drei Stellungen. Die Steuereinheit 144 kann ein Erntegutvorhandenseinssignal von einem Erntegutsensor 157 empfangen. Dieser Sensor kann ein optischer Sensor sein. Die Steuereinheit 144 empfängt auch Signale von einer Empfangseinrichtung 158 zum Empfang von Signalen des globalen Positionierungssystems (GPS). Die Empfangseinrichtung 158 kann der Steuereinheit 144 die genaue Position des Mähdreschers 10 von Satelliten oder anderen Referenzen bereitstellen.

Die Steuereinheit 144 ist derart konfiguriert, dass sie Steuersignale an ein System 141 zum Anheben und Absenken des Erntevorsatzes 16, an ein Entladeschneckenfördererausfahrsystem 172, an ein Trenneinrichtungseinstellsystem 176, an ein Trenneinrichtungseinschaltsystem 182, an ein Lenksystem 192, an ein Bremssystem 195, an ein Vierradantriebseinschaltventil 204 und an eine Motordrosselklappensteuerung 208 sendet.

Als Beispiel eines von der Steuereinheit 144 gesteuerten Betriebssystems wird (s. Figur 2) der Fluss hydraulischen Fluids in die und aus den Zylindern 63 durch ein Paar elektromagnetisch betriebener elektrohydraulischer Steuerventile 140a und 140b gesteuert, die durch Treiber 142a und 142b betrieben werden, welche von der Steuereinheit 144 erzeugte elektrische Steuersignale empfangen. Das System 141 zum Anheben und Absenken des Erntevorsatzes 16 umfasst außerdem eine manuellen Bedieneinrichtung 146, die mit der Steuereinheit 144 signalübertragend verbunden ist.

Das Entladeschneckenfördererausfahrsystem 172 könnte Treiber und Ventile aufweisen, die im Wesentlichen mit denen identisch sind, die für das System 141 für das Anheben und Absenken des Erntevorsatzes 16 gezeigt sind, um einen Zylinder auszustrecken oder einzuziehen, um den Entladeschneckenförderer 54 zu verschwenken. Ein manueller Aktor 173 ist mit der Steuereinheit 144 signalübertragend verbunden, um den Entladeschneckenförderer 54 in eine Betriebsstellung zu bringen, indem er ihn senkrecht zur Fahrtrichtung des Mähdreschers 10 verschwenkt oder ihn in eine Position parallel zur Fahrtrichtung des Mähdreschers 10 einzuziehen.

Das Trenneinrichtungseinstellsystem 176 kann auch derartige Treiber und Ventile umfassen, um einen Zylinder zwecks einer Einstellung von Abständen in der Gutbearbeitungseinrichtung 24 auszustrecken oder einzuziehen. Eine manuelle Bedieneinrichtung 177 ist mit der Steuereinheit 144 signalübertragend verbunden, um eine Einstellung der Gutbearbeitungseinrichtung 24 zu bewirken.

Das Trenneinrichtungseinschaltsystem 182 kann durch eine manuelle Bedieneinrichtung 184 eingeschaltet werden. Das Trenneinrichtungseinschaltsystem 182 umfasst ein geeignetes Antriebselement 210, das durch Betätigen einer Kupplung 212 (über geeignete Riemenscheiben und Riemen) mit der Antriebsleistung des Motors 110 verbunden und davon getrennt wird. Die Kupplung 212 wird durch elektrohydraulische Ventile 214 gesteuert. Die elektrohydraulischen Ventile 214 sind über (nicht gezeigte) Treiber mit der Steuereinheit 144 signalübertragend verbunden und können durch die Steuereinheit gesteuert werden, um die Rotationsleistung des Motors 110 dem Rotor 28 des Mähdreschers 10 zuführen zu können oder ihn davon zu trennen.

Das Lenksystem 192 könnte Treiber und Ventile aufweisen, die im Wesentlichen mit denen für das System 141 zum Anheben und Absenken des Erntevorsatzes 16 identisch sind, um einen Zylinder zwecks Drehung der Räder 14 des Mähdreschers 10 auszustrecken oder einzuziehen und den Mähdrescher 10 zu lenken. Ein Positionssensor 194 kann mit dem Lenkrad verbunden sein und mit der Steuereinheit 144 signalübertragend verbunden sein, um ein der Lenkradposition entsprechendes Signal zu übersenden.

Das Vierradantriebseinschaltventil 204 wird durch eine Eingabeeinrichtung 205 manuell betätigt, um einen Vierradantriebsmodus durch Zuführen oder Ableiten von unter Druck stehendem hydraulischen Fluid an die oder von den Motoren 125a, 125b zu aktivieren oder abzuschalten. Das Ventil 204 ist mit der Steuereinheit 144 über einen geeigneten Treiber (nicht gezeigt) signalübertragend verbunden.

Ein Drosselklappenpositionssensor 220 ist mit der Drosselklappensteuerung 208 verbunden und mit der Steuereinheit 144 signalübertragend verbunden und sendet ein Signal an die Steuereinheit 144, das der Drosselklappenposition entspricht. Anstelle einer Drosselklappe könnte auch eine elektronische Motorsteuerung verwendet werden, die ihre Funktion übernimmt.

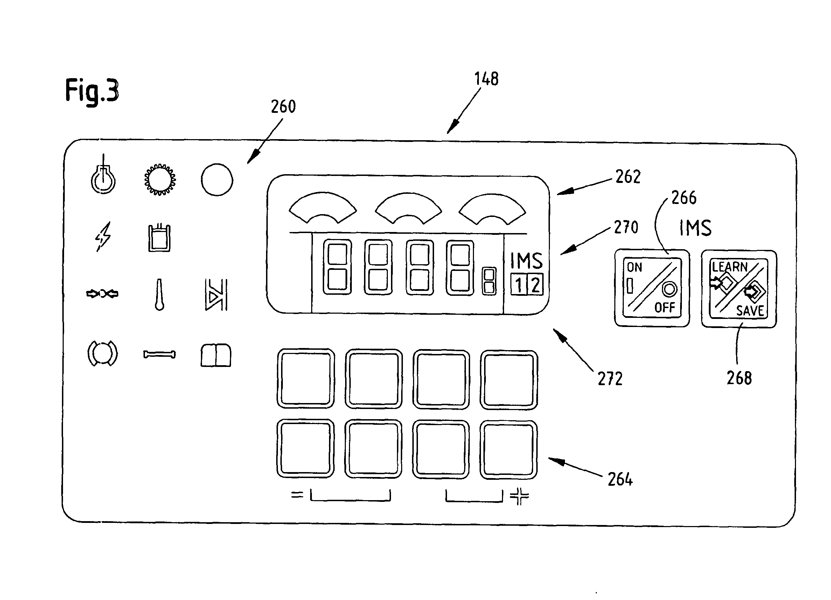

Es wird nun auf die Figur 3 verwiesen, in der die Eingabe- und Anzeigeeinheit 148 gezeigt ist. Das linke Drittel der Eingabe- und Anzeigeeinheit 148 umfasst eine Vielzahl an Warn- und Statuslichtern 260, die verschiedenen Funktionen des Mähdreschers 10 zugeordnet sind, sich aber nicht auf die vorliegende Erfindung beziehen. Der obere Abschnitt des mittleren Teils der Eingabe- und Anzeigeeinheit 148 umfasst eine grafische/numerische Anzeige 262. Der untere Abschnitt des mittleren Teils der Eingabe- und Anzeigeeinheit 148 umfasst eine Vielzahl an druckempfindlichen Schaltern 264, die verwendet werden können, um auszuwählen, welche Parameter durch den numerischen Anzeigeabschnitt der Anzeige 262 angezeigt werden. Die Eingabe- und Anzeigeeinheit 148 umfasst auch einen Lautsprecher (nicht gezeigt), der hörbare Geräusche in Reaktion auf bestimmte Bedingungen und Operationen erzeugt.

Der mittlere Teil des rechten Drittels der Eingabe- und Anzeigeeinheit 148 umfasst einen berührungsempfindlichen Ein/Aus-Schalter 266 und einen berührungsempfindlichen Lern/Abspeicherschalter 268, die beide in Verbindung mit dem automatischen Steuersystem verwendet werden. Der untere rechte Teil der Anzeige 262 umfasst ein Gerätemanagementsystemanzeigeelement 270 und ein zweifaches Sequenzanzeigeelement 272, die beide erfindungsgemäß abhängig vom Betriebszustand aufleuchten, wie weiter unten detaillierter beschrieben.

Um die vorliegende Erfindung auszuführen, führt die Steuereinheit 144 gespeicherte Programme aus. Die Steuereinheit 144 leitet Entfernungsinformationen vom Signal des Geschwindigkeitssensors 154 unter Verwendung wohlbekannter Integrationstechniken ab. Die programmierte Steuereinheit 144 arbeitet mit den in den Figuren 1 und 2 gezeigten Elementen zusammen und implementiert dabei das erfindungsgemäße Steuersystem.

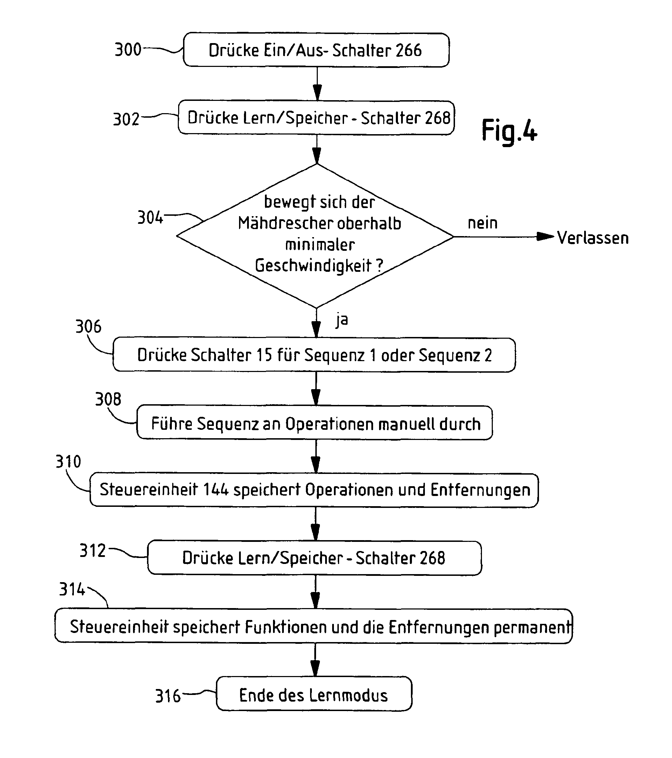

Es wird auf die Figur 4 verwiesen, gemäß der der Lernmodus folgendermaßen funktioniert. Zuerst wird in einem Schritt 300 das automatische Steuersystem eingeschaltet, indem der Ein/Aus-Schalter 266 gedrückt wird und das Gerätemanagementsystemanzeigeelement 270 schaltet sich ein. Ein Drücken des Lern/Abspeicherschalters 268 im Schritt 302 aktiviert den Lern/Abspeichermodus und das Gerätemanagementsystemanzeigeelement 270 wird anfangen zu blinken und ein periodischer Signalton wird auftreten. Der Schritt 304 erlaubt eine Fortsetzung des Lern/Abspeichermodus nur, wenn der Mähdrescher 10 sich im Vorwärtsgang des Getriebes 118 befindet und sich schneller als mit einer minimalen Geschwindigkeit bewegt. Während des Lern/Abspeichermodus wird das Steuersystem aus dem Lern/Abspeichermodus herausgehen und ihn löschen und die Sequenz wird gelöscht, wenn der Bediener das Getriebe 118 aus dem Vorwärtsgang herausschaltet.

Im Schritt 306 stellt der Bediener den Schalter 156 kurzzeitig in seine Position für Sequenz 1 oder Sequenz 2 und die entsprechende Sequenznummer des zweifachen Sequenzanzeigeelements 272 wird anfangen, aufzublitzen. Dann kann der Bediener, wie bei 308 angegeben, eine Sequenz manuell ausgeführter Operationen durchführen, wie ein Schalten des Getriebes 118 durch ein Handhaben der verschiebbaren Hebeleinheit 150 oder ein Anheben oder Absenken des Erntevorsatzes 16 durch ein Betätigen der manuellen Bedieneinrichtung 146.

Wie bei 310 angezeigt, zeichnet die Steuereinheit 144 (an einer temporären Speicherstelle) alle manuell durchgeführten Operationen zusammen mit den verschiedenen vom Mähdrescher zwischen den verschiedenen manuell durchgeführten Operationen zurückgelegten Entfernungen auf. Entfernungen werden basierend auf aktuellen Geschwindigkeiten berechnet, die durch den Sensor 154 erfasst werden und mit einer Auflösung in Millimetern aufgezeichnet. Entfernungsinformationen werden nur aufgezeichnet, wenn sich der Mähdrescher im Vorwärtsgang befindet und sich schneller als mit der minimalen Geschwindigkeit bewegt. Die Entfernung kann auch mittels der Empfangseinrichtung 158 ermittelt werden.

Im Schritt 312 wird der Lern/Abspeicherschalter 268 wieder gedrückt und wie im Schritt 314 dargestellt, speichert die Steuereinheit 144 in einem permanenten Speicher die Sequenz der Operationen und die entsprechenden Entfernungen entweder als Sequenz 1 oder als Sequenz 2, abhängig davon, wie der Schalter 156 zuvor eingestellt war. Der Lern/Abspeichermodus endet dann im Schritt 316 und das aufblitzende zweifache Sequenzanzeigeelement 272 hört mit dem Aufblitzen auf und allein das Gerätemanagementsystemanzeigeelement 270 bleibt aktiviert.

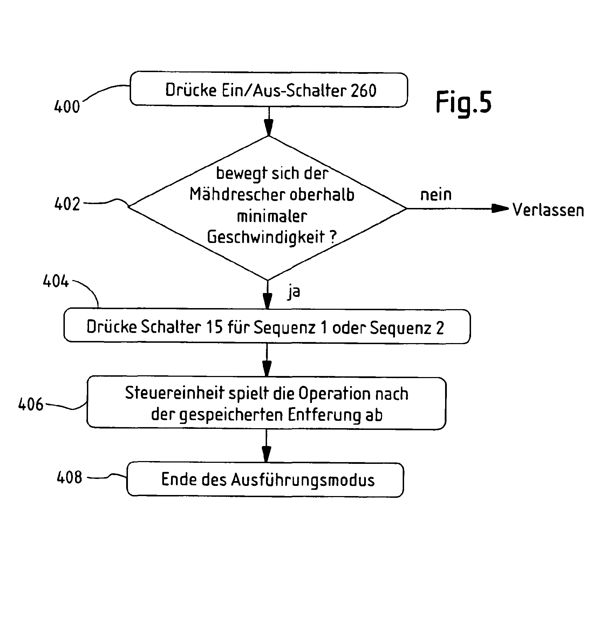

Nachdem eine oder mehrere Sequenzen an Operationen und Entfernungen im Lern/Abspeichermodus gelernt und abgespeichert wurden, kann der in der Figur 5 dargestellte Ausführungsmodus durchgeführt werden. Im Schritt 400 wird der Ein/Aus-Schalter 266 gedrückt, um das System einzuschalten und das Gerätemanagementsystemanzeigeelement 270 wird eingeschaltet. Der Schritt 402 erlaubt eine Ausführung des Ausführungsmodus, wenn sich der Mähdrescher 10 in einem Vorwärtsgang des Getriebes 118 befindet und sich schneller als mit einer minimalen Geschwindigkeit bewegt.

Wenn sich der Mähdrescher 10 im Schritt 404 einer Stelle des Felds nähert, an der der Bediener wünscht, eine gespeicherte Sequenz an Operationen durchzuführen, bewegt der Bediener kurzzeitig den Schalter 156 in seine Stellung, die der Sequenz eins oder der Sequenz zwei entspricht, um auszuwählen, welche gespeicherte Sequenz abgespielt wird, und die entsprechende "1" oder "2" auf dem zweifachen Sequenzanzeigeelement 272 wird beleuchtet. Die "1" oder "2" auf dem zweifachen Sequenzanzeigeelement 272 wird für zumindest drei Sekunden angezeigt bleiben, sogar wenn die ausgeführte Sequenz weniger als drei Sekunden für ihre Ausführung braucht. Dann führt die Steuereinheit 144, wie im Schritt 406 angedeutet, automatisch die ausgewählte Sequenz der abgespeicherten Operationen durch, wie ein automatisches Schalten des Getriebes 118 ohne eine Betätigung des Schalthebels 150 durch den Bediener, oder ein automatisches Anheben oder Absenken des Erntevorsatzes 16 ohne dass der Bediener die Bedieneinrichtung 146 betätigt. Diese gespeicherten Operationen werden mit denselben relativen Sequenzen (Entfernungen) dazwischen abgespielt, wie sie gelernt wurden, unabhängig davon, ob sich der Mähdrescher mit derselben oder einer niedrigeren oder höheren Geschwindigkeit bewegt. Nach der Vervollständigung der Sequenzausführung wird die Nummer 1 oder 2 auf dem zweifachen Sequenzanzeigeelement 272 ausgeschaltet. Der Ausführungsmodus endet dann beim Schritt 408.

Wenn in dem eingeschalteten System zwei Sequenzen abgespeichert sind (und solange sich der Mähdrescher 10 in einem Vorwärtsgang des Getriebes 118 befindet und mit einer Geschwindigkeit fährt, die höher als die minimale Geschwindigkeit ist), kann der Bediener eine automatische Durchführung der ersten Sequenz veranlassen, indem er kurzzeitig den Schalter 156 in seine Position "1" verbringt, beispielsweise am Ende jeder Gutreihe (bzw. Feldüberfahrt). In ähnlicher Weise kann der Bediener ein automatisches Abspielen der zweiten Sequenz veranlassen, indem er den Schalter 156 kurzzeitig in seine Position "2" am Anfang jeder Reihe (bzw. Feldüberfahrt) verbringt.

Somit kann das hier beschriebene Steuersystem verwendet werden, eine Sequenz von Operationen am Anfang jeder Erntegutreihe oder Feldüberfahrt mit einer einzelnen kurzzeitigen Betätigung des Schalters 156 abzuspielen und eine andere Sequenz von Operationen am Ende jeder Erntegutreihe oder Feldüberfahrt mit einer anderen einzelnen kurzzeitigen Betätigung des Schalters 156 abzuspielen. Da das Steuersystem auf der Basis der vom Mähdrescher 10 zurückgelegten Entfernungen operiert, anstelle auf einer Basis von Zeitmesswerten, können die Sequenzen langsam gelernt werden, wenn sich der Mähdrescher langsam bewegt, und automatisch schneller ausgeführt oder abgespielt werden, wenn sich der Mähdrescher bei normalen Betriebsgeschwindigkeiten bewegt. Das gibt dem Bediener hinreichend Zeit, den Lernmodus durchzuführen und es der Steuereinheit 144 zu ermöglichen, eine komplexe Sequenz von Operationen zu erlernen.

Während der oben beschriebenen Operationen wird außerdem folgendermaßen vorgegangen. Ein Signalton (Piepsen) wird auftreten, wenn der Ein/Aus-Schalter 266 gedrückt wird. Wenn ein System eingeschaltet wird, wird der Inhalt der gespeicherten Sequenzen auf der Eingabe- und Anzeigeeinheit 148 angezeigt. Jede Sequenz, angefangen mit der Sequenz 1, wird alle zwei Sekunden nach und nach jedes erlernte und aufgezeichnete Ereignis anzeigen, wonach "Ende" auf der Anzeige 262 angezeigt wird.

Gelernte Sequenzen werden beliebig aufgehoben. Eine voreingestellte maximale Anzahl, wie beispielsweise 12 Operationen, kann aufgezeichnet werden. Der Bediener kann eine gelernte Sequenz aus dem Speicher löschen. Wenn der Lern/Abspeichermodus während des Lernprozesses gelöscht wird, d. h. die Sequenz nicht normal beendet wurde, wird die Sequenz aus dem Speicher gelöscht. Eine gespeicherte Sequenz kann aus dem Speicher gelöscht werden, indem normal in den Lern/Abspeichermodus übergegangen wird, eine Sequenz ausgewählt, und dann der Lern/Abspeicherschalter 268 betätigt wird, ohne irgendwelche Funktionen des Mähdreschers 10 zu betreiben. Das bewirkt, dass das System den Lern/Abspeichermodus verlässt und das zweifache Sequenzanzeigeelement 272 mit dem Aufblitzen aufhört, während nur das Gerätemanagementsystemanzeigeelement 270 an bleibt.

Sobald der Lern/Abspeichermodus vervollständigt ist, können keine Operationen der Sequenz mehr zugefügt werden. Die Entfernungsinformation wird nur akkumuliert, während sich der Mähdrescher 10 im Vorwärtsgang befindet und oberhalb der minimalen Geschwindigkeit.

Der Lern/Abspeichermodus kann auch gelöscht werden, indem der Ein/Aus-Schalter 266 gedrückt wird und entweder a) innerhalb von 30 Sekunden mit dem Schalter 156 keine Sequenz ausgewählt wird, b) innerhalb von 30 Sekunden nachdem der Schalter 156 betätigt wurde, keine Operation gelernt wurde, c) der Lern/Abspeicherschalter 268 nicht innerhalb von 30 Sekunden nach der ersten gelernten Operation betätigt wird, d) das Getriebe 118 aus dem Vorwärtsgang herausgeschaltet wird, e) wenn der Bediener nicht anwesend ist und der Mähdrescher 10 sich länger als 5 Sekunden nicht bewegt.

Das Gerätemanagementsystemanzeigeelement 270 in der Anzeige 262 leuchtet auf, wenn das System eingeschaltet ist. Wenn der Ein/Aus-Schalter 266 gedrückt wird, während das automatische Steuersystem eingeschaltet ist, schaltet das Steuersystem die automatische Steuerung und das Gerätemanagementsystemanzeigeelement 270 aus. Wenn der Ein/Aus-Schalter 266 gedrückt wird und der Schalter 156 sich nicht in der Neutralstellung befindet, wird das automatische Steuersystem nicht eingeschaltet. Wenn das Steuersystem sich in einem Lern/Abspeichermodus befindet, wenn das automatische Steuersystem abgeschaltet wird, wird der Lern/Abspeichermodus gelöscht und keine Operationssequenz wird abgespeichert. Wenn das Steuersystem eine Sequenz ausführt (abspielt), wird die Ausführung der Sequenz abgebrochen, wenn das automatische Steuersystem abgeschaltet wird.

Ein Signalton wird auftreten, wenn der Lern/Abspeicherschalter 268 gedrückt wird. Das Gerätemanagementsystemanzeigeelement 270 wird während des Lernmodus aufblitzen und alle zwei Sekunden wird die Steuereinheit 144 einen Signalton erzeugen. Wenn das automatische Steuersystem nicht eingeschaltet ist, wird ein Drücken des Lern/Abspeicherschalters 268 keine Wirkung haben. Wenn der Lern/Abspeicherschalter 268 gedrückt wird, wenn das automatische Steuersystem eingeschaltet ist, wird das System in den Lern/Abspeichermodus eintreten.

Wenn das automatische Steuersystem aus ist, wird ein Drücken jeglichen Teils des Schalters 156 keine Wirkung haben. Wenn das automatische Steuersystem eingeschaltet ist und der Schalter 156 von der neutralen Position entweder in die Position für die Sequenz 1 oder die Position für die Sequenz 2 übergeht, wird das Steuersystem anfangen, die Sequenz auszuführen (abzuspielen). Wenn der Schalter 156 gedrückt wird, während der Lernmodus aktiv ist, wird das System anfangen, nacheinander ausgeführte Operationen zu erlernen.

Eine Ausführung der Sequenz wird immer mit der ersten Operation der Sequenz anfangen, sogar wenn die Sequenz zuvor abgebrochen wurde. Während des Ausführungsmodus wird das System immer eine gelernte Operation ausführen. Wenn das jeweilige anzusteuernde Element sich bereits in dem Status befindet, der Ergebnis der Ausführung der gelernten Operation ist, wird das System keine Auswirkung auf dieses Element haben. Wenn die Operation beispielsweise ein Anheben des Erntevorsatzes 16 ist, der Erntevorsatz 16 aber bereits vollständig angehoben ist, geht die Ausführung bloß auf die nächste Operation der Sequenz über. Wenn die Sequenz bereits in der Ausführung ist und dann der Schalter 156 wieder zwecks Ausführung der jeweils aktiven Sequenz betätigt wird, wird die Betätigung des Schalters 156 ignoriert und die Ausführung der Sequenz wird fortgeführt. Wenn eine Sequenz gerade ausgeführt wird und dann der Schalter 156 zur Ausführung der jeweils anderen Sequenz betätigt wird, wird das System die Ausführung der Sequenz abbrechen. Wenn ein Element zu dem Zeitpunkt, an dem eine Sequenz aktiviert wird, abgeschaltet ist, wird das System die Sequenz nicht ausführen.

Der Bediener kann ein Kupplungspedal verwenden, um das System zu veranlassen, die Entfernung während eines Lern/Abspeichermodus zu akkumulieren, und die automatische Ausführung einer Operation während der Ausführung einer gespeicherten Sequenz zeitweise anzuhalten. Sobald 30 Sekunden abgelaufen sind, wird die Sequenz abgebrochen, unabhängig davon, ob die Kupplung sich im Eingriff befindet oder nicht. Das System wird auch eine Ausführung einer Sequenz unterbinden, wenn die Gangstufe des Getriebes 118 sich oberhalb einer ausgewählten maximalen Gangstufe befindet, solange die Sequenz nicht oberhalb der maximalen Gangstufe erlernt wurde.

Wenn der Bediener während der automatischen Ausführung einer Sequenz manuell eine Funktion veranlasst, wird diese manuell veranlasste Funktion (unter diesem Steuersystem) für den Rest der Ausführung dieser Sequenz unterbunden, d. h. nicht automatisch ausgeführt. Die anderen Operationen der Sequenz werden wie gelernt ausgeführt und die betroffene manuell betätigte Funktion wird nicht aus der gelernten Sequenz gelöscht.

Als Beispiel des Funktionsmanagementsystems des Mähdreschers 10 kann die Situation des Mähdreschers 10, der sich dem Ende einer Feldüberfahrt nähert, umdreht und am Anfang einer neuen Feldüberfahrt wieder in das Feld einfährt, gesteuert werden. Das Ende der Feldüberfahrt kann durch den Erntegutsensor 157 für eine automatische Aktivierung des automatischen Steuersystems erfasst werden oder durch den Bediener für eine manuelle Aktivierung des automatischen Steuersystems visuell erfasst werden. Bestimmte Funktionen müssen am Ende der Feldüberfahrt vorgenommen werden. Wenn die Funktionen automatisch oder manuell für eine Sequenz 1 veranlasst werden, könnten die folgenden Operationen in die Steuereinheit 144 vorprogrammiert sein. Der Erntevorsatz 16 wird durch das System 141 zum Anheben und Absenken des Erntevorsatzes 16 angehoben. Das Entladeschneckenfördererausfahrsystem 172 wird aktiviert, um den Entladeschneckenförderer 54 einzufahren und keine äußeren Objekte zu berühren, wenn der Mähdrescher 10 für die nächste Feldüberfahrt umdreht. Das Trenneinrichtungseinschaltsystem 182 kann veranlasst werden, die Kupplung 212 des Rotors 28 außer Eingriff zu bringen, so dass der Rotor 28 sich nicht dreht. Das Lenksystem 192 kann automatisch gesteuert werden, um aus dem Feld herauszufahren und zu drehen, um wieder in das Feld hineinzufahren. Das Lenksystem 192 kann außerdem von der Steuereinheit 144 entsprechend der Signale der Empfangseinrichtung 158 gesteuert werden. Nach Verlassen des Schnitts kann das Getriebe 118 in einen höheren Gang geschaltet werden. Die Drosselklappe 208 kann auch betätigt werden, um die Motorgeschwindigkeit zu erhöhen. Das Vierradantriebseinschaltventil 204 kann betätigt werden, um die Hydraulikmotore 124a, 124b des Vierradantriebs abzuschalten. Die Bremsen können wahlweise aktiviert werden, um das Lenken zu unterstützen. Diese automatischen Schritte vergrößern die Manövrierbarkeit, Geschwindigkeit, Betriebsstoffeffizienz und Leistung.

Wenn der Mähdrescher 10 wieder in das Feld einfährt, werden viele dieser Operationen umgekehrt. Das Vierradantriebseinschaltventil 204 wird betätigt, um zwecks Vierradantriebs hydraulisches Fluid an die hydraulischen Motoren 124a, 124b abzugeben. Die Bremsen werden gelöst. Die Drosselklappe 208 wird auf eine verminderte Motordrehzahl gestellt. Die Kupplungen 120 des Getriebes 118 werden angesteuert, so dass in einen niedrigeren, leistungsstärkeren Gang geschaltet wird. Die Steuerung des Lenksystems kann auf einen manuellen Betrieb zurückgehen oder zur genauen Bewegung des Mähdreschers 10 entlang der Schnittkante entsprechend eines Signals von der Empfangseinrichtung 158 übergehen. Die Kupplung 212 des Rotorantriebs kann betätigt werden, um eine Drehung des Rotors 28 aufzunehmen. Die Trenneinrichtung wird durch das Trenneinrichtungseinstellsystem 176 eingestellt. Der Erntevorsatz 16 wird zum Eintritt in den Schnitt abgesenkt. Der Entladeschneckenförderer 54 wird im Wesentlichen senkrecht zur Fahrtrichtung des Mähdreschers 10 ausgefahren.

Die Erfindung eignet sich nicht nur für Mähdrescher, sondern für beliebige Erntemaschinen, wie Feldhäcksler. Anstelle von zwei Sequenzen kann auch eine höhere oder geringere Zahl an Sequenzen abgespeichert werden.

## Patentansprüche

1. Automatisches Steuersystem eines Mähdreschers (10), der einen Erntevorsatz (16), eine zur Veränderung der Höhe des Erntevorsatzes (16) eingerichtete Einrichtung, eine zur Veränderung der Vortriebsgeschwindigkeit des Mähdreschers (10) eingerichtete Einrichtung und eine Steuereinheit (144) aufweist, die mit der zur Veränderung der Höhe des Erntevorsatzes (16) eingerichteten Einrichtung und der zur Veränderung der Vortriebsgeschwindigkeit des Mähdreschers (10) eingerichteten Einrichtung signalübertragend verbunden ist, wobei die Steuereinheit (144) einen Speicher umfasst, der es ermöglicht, die Höhe des Erntevorsatzes (16) und die Vortriebsgeschwindigkeit entsprechend einer programmierten Sequenz zu verändern, **dadurch gekennzeichnet, dass** die Steuereinheit (144) signalübertragend mit einem Schalter (156) verbunden ist, dessen Betätigung einen Ablauf der programmierten Sequenz veranlasst, dass das Steuersystem in einen Lernmodus verbringbar ist, in dem es eine Sequenz von durch einen Bediener manuell veranlassten Operationen aufzeichnet und die Sequenz danach in einem Ausführungsmodus abspielbar ist, dass die Steuereinheit (144) mit einem Erntegutsensor (157) verbunden ist, der betreibbar ist, der Steuereinheit (144) ein Erntegutvorhandenseinssignal zu übersenden, und dass die Steuereinheit (144) betreibbar ist, eine einem Ende einer Feldüberfahrt zugeordnete Sequenz ablaufen zu lassen, wenn das Ende der Feldüberfahrt der Steuereinheit (144) durch den Erntegutsensor (157) signalisiert wird.

2. Steuersystem nach Anspruch 1, **dadurch gekennzeichnet, dass** die Steuereinheit (144) mit einem Vierradantriebsauswahlmechanismus verbunden ist, der durch die Sequenz steuerbar ist.

3. Steuersystem nach Anspruch 1 oder 2, **dadurch gekennzeichnet, dass** die Steuereinheit (144) mit einem Entladeschneckenfördererausfahrsystem (172) verbunden ist, das durch die Sequenz steuerbar ist.

4. Steuersystem nach einem der Ansprüche 1 bis 3, **dadurch gekennzeichnet, dass** die Steuereinheit (144) mit einem Lenksystem (192) verbunden ist, das durch die Sequenz steuerbar ist.

5. Steuersystem nach einem der Ansprüche 1 bis 4, **dadurch gekennzeichnet, dass** die Steuereinheit (144) mit einem Bremssystem (195) verbunden ist, das durch die Sequenz steuerbar ist.

6. Steuersystem nach einem der Ansprüche 1 bis 5, **dadurch gekennzeichnet, dass** die Steuereinheit (144) mit einem Trenneinrichtungseinstellsystem (176) verbunden ist, das durch die Sequenz steuerbar ist.

7. Steuersystem nach einem der Ansprüche 1 bis 6, **dadurch gekennzeichnet, dass** die Steuereinheit (144) mit einer Einrichtung zum Ein- und Ausschalten des Antriebs einer drehbaren Erntegutbearbeitungseinrichtung (24) verbunden ist, die durch die Sequenz steuerbar ist.

8. Steuersystem nach einem der Ansprüche 1 bis 7, **dadurch gekennzeichnet, dass** die Steuereinheit (144) mit einer Empfangseinrichtung (158) zum Empfang von Signalen eines Positionierungsbestimmungssystems verbunden ist, unter deren Berücksichtigung die Sequenz abgerufen wird.

9. Steuersystem nach einem der Ansprüche 1 bis 8, **dadurch gekennzeichnet, dass** die Sequenz der Operationen auf einem vom Mähdrescher (10) zurückgelegten Weg beruht und von der jeweiligen Geschwindigkeit unabhängig ist.

## Claims

1. An automatic control system of a combine harvester (10), which comprises a harvesting header (16), a device arranged for altering the height of the harvesting header (16), a device arranged for altering the speed of propulsion of the combine harvester (10) and a control unit (144) which is coupled for signal transmission to the device arranged for altering the height of the harvesting header (16) and the device arranged for altering the speed of propulsion of the combine harvester (10), wherein the control unit (144) has a memory which makes it possible to alter the height of the harvesting header (16) and the speed of propulsion according to a programmed sequence, **characterized in that** the control unit (144) is coupled for signal transmission to a switch (156) whose actuation initiates a cycle of the programmed sequence, **in that** the control system can be put in a learning mode, in which a sequence of operations caused manually by an operator is recorded and the sequence can be played back thereafter in an execution mode, **in that** the control unit (144) is coupled to a crop sensor (157) which is operable to transmit a crop presence signal to the control unit (144) and **in that** the control unit (144) is operable to enable a sequence associated with an end of a traverse of a field to run when the end of the traverse of the field is signalled to the control unit (144) by the crop sensor (157).

2. A control system according to claim 1, **characterized in that** the control unit (144) is coupled to a four wheel drive selector mechanism which can be controlled by the sequence.

3. A control system according to claim 1 or 2, **characterized in that** the control unit (144) is coupled to a discharge auger conveyor deployment system (172) which can be controlled by the sequence.

4. A control system according to any of claims 1 to 3, **characterized in that** the control unit (144) is coupled to a steering system (192) which can be controlled by the sequence.

5. A control system according to any of claims 1 to 4, **characterized in that** the control unit (144) is coupled to a brake system (195) which can be controlled by the sequence.

6. A control system according to any of claims 1 to 5, **characterized in that** the control unit (144) is coupled to a separating device adjustment system (176) which can be controlled by the sequence.

7. A control system according to any of claims 1 to 6, **characterized in that** the control unit (144) is coupled to a device for switching on and off the drive to a rotatable crop processing device (24), which can be controlled by the sequence.

8. A control system according to any of claims 1 to 7, **characterized in that** the control unit (144) is coupled to a receiving device (158) for receiving signals from a position determining system, taking into account of which the sequence is called.

9. A control system according to any of claims 1 to 8, **characterized in that** the sequence of the operations is based on a path traversed by the combine harvester (10) and is dependent on the current speed.

## Revendications

1. Système de commande automatique d'une moissonneuse-batteuse (10), qui comporte une barre de coupe (16), une unité conçue pour modifier la hauteur de la barre de coupe (16), une unité conçue pour modifier la vitesse d'avance de la moissonneuse-batteuse (10) et une unité de commande (144), qui est reliée par transmission de signaux avec l'unité conçue pour modifier la hauteur de la barre de coupe (16) et l'unité conçue pour modifier la vitesse d'avance de la moissonneuse-batteuse (10), l'unité de commande (144) comportant une mémoire, qui permet de modifier en fonction d'une séquence programmée la hauteur de la barre de coupe (16) et la vitesse d'avance, **caractérisé en ce que** l'unité de commande (144) est reliée par transmission de signaux avec un commutateur (156) qui est manoeuvré pour activer le déroulement d'une séquence programmée, **en ce que** le système de commande peut être amené en mode autodidactique, dans lequel il enregistre une séquence d'opérations activées manuellement par une personne de service et ensuite, en mode d'exécution, exécute la séquence, **en ce que** l'unité de commande (144) est reliée à un capteur de récoltes (157) qui est apte à transmettre à l'unité de commande (144) un signal de présence de récoltes, et **en ce que** l'unité de commande (144) est apte à faire exécuter une séquence associée à une fin d'un déplacement sur le champ lorsque la fin du déplacement sur le champ a été signalée à l'unité de commande (144) par le capteur de récoltes (157).

2. Système de commande selon la revendication 1, **caractérisé en ce que** l'unité de commande (144) est reliée à un mécanisme de sélection d'une transmission à quatre roues motrices, lequel est apte à être commandé par la séquence.

3. Système de commande selon la revendication 1 ou 2, **caractérisé en ce que** l'unité de commande (144) est reliée à un système de déploiement d'une vis sans fin de déchargement (172), lequel est apte à être commandé par la séquence.

4. Système de commande selon l'une quelconque des revendications 1 à 3, **caractérisé en ce que** l'unité de commande (144) est reliée à un système de direction (192), qui est apte à être commandé par la séquence.

5. Système de commande selon l'une quelconque des revendications 1 à 4, **caractérisé en ce que** l'unité de commande (144) est reliée à un système de freinage (195), qui est apte à être commandé par la séquence.

6. Système de commande selon l'une quelconque des revendications 1 à 5, **caractérisé en ce que** l'unité de commande (144) est reliée à un système de réglage d'une unité de séparation (176), lequel est apte à être commandé par la séquence.

7. Système de commande selon l'une quelconque des revendications 1 à 6, **caractérisé en ce que** l'unité de commande (144) est reliée à un dispositif destiné à coupler et découpler l'entraînement d'un dispositif rotatif de traitement des récoltes (24), lequel est apte à être commandé par la séquence.

8. Système de commande selon l'une quelconque des revendications 1 à 7, **caractérisé en ce que** l'unité de commande (144) est reliée à un récepteur (158) destiné à recevoir les signaux d'un système de détection de position, la séquence étant lancée en tenant compte dudit récepteur.

9. Système de commande selon l'une quelconque des revendications 1 à 8, **caractérisé en ce que** la séquence des opérations est basée sur un trajet parcouru par la moissonneuse-batteuse (10) et est indépendante de la vitesse de celle-ci.
